# NEUE EUROPÄISCHE PATENTSCHRIFT

(11) **EP 1 305 683 B2**
(45) Veröffentlichungstag und Bekanntmachung des Hinweises auf die Entscheidung über den Einspruch: **14.09.2011**
(45) Hinweis auf die Patenterteilung: 20.10.2004
(21) Anmeldenummer: 01957930.9
(22) Anmeldetag: 07.07.2001
(51) Int. Cl.: G05D 23/00, G05D 23/02, F24D 19/10, F16K 41/04

(54) **RÜCKLAUFTEMPERATURBEGRENZER**
RETURN TEMPERATURE LIMITER
LIMITEUR DE TEMPERATURE DE RETOUR

(30) Priorität: 29.07.2000 DE 20013130 U
(43) Veröffentlichungstag der Anmeldung: 02.05.2003
(73) Patentinhaber: Honeywell Technologies Sarl, 1110 Morges (CH)
(72) Erfinder: SANDERS, BERNHARD, 59755 Arnsberg (DE)
(74) Vertreter: Basfeld, Rainer
(86) Internationale Anmeldenummer: PCT/EP2001/007810
(87) Internationale Veröffentlichungsnummer: WO 2002/010875

(56) Entgegenhaltungen:
- DE-A- 19 855 926
- US-A- 1 786 948
- US-A- 3 797 805

## Beschreibung

Die vorliegende Erfindung betrifft einen Rücklauftemperaturbegrenzer umfassend einen Thermostatkopf mit einem gegenüber einem Basisteil um eine Achse verdrehbaren Drehgriff und ein Thermostatventil mit einem axial verstellbaren Stößel, welcher mit einem Übergangsstück aus einem gut wärmeleitenden Material in Kontakt steht, wobei eine Temperaturerhöhung des Wärmeträgers im Rücklauf eine Axialbewegung eines auf den Stößel einwirkenden sich ausdehnenden Elements bewirkt, wobei jedoch das Innere des Rücklauftemperaturbegrenzers von dem Wärmeträger nicht durchspült wird.

Ein Rücklauftemperaturbegrenzer der eingangs genannten Art ist beispielsweise in der DE 198 55 926 A1 beschrieben. Bei diesem bekannten Rücklauftemperaturbegrenzer wird ein mit einer sich bei Temperaturerhöhung ausdehnenden Flüssigkeit gefülltes Thermostatelement als sich ausdehnendes Element verwendet, welches relativ großvolumig ist und im Prinzip den gesamten Innenraum des Thermostatkopfs ausfüllt. Gemäß einer Variante dieses Rücklauftemperaturbegrenzers ist vorgesehen, zwei dieser Thermostatelemente hintereinander anzuordnen, so dass sich ihre Längenänderungen bei Temperaturänderungen summieren. Dabei sollen Temperaturveränderungen der im Regler eingeschlossenen Raumluft Volumenänderungen in dem oberen Thermostaten bewirken, während die Temperaturänderungen des Wärmeträgers im Rücklauf über ein gut wärmeleitendes Übergangsstück auf den unteren Thermostaten einwirken.

Dadurch, dass das flüssigkeitsgefüllte Thermostatelement relativ großvolumig ist, verbleibt im Inneren des Thermostatkopfs kein Raum für weitere Bauelemente, wie sie beispielsweise für ein Thermostatventil herkömmlicher Bauart benötigt werden. Die Verwendung von zwei in axialer Richtung hintereinander geschalteten Thermostatelementen zur Erzielung eines größeren Längenhubs führt zu einer in der Praxis ungünstigen übermäßigen Bauhöhe des Thermostatkopfs. Außerdem handelt es sich bei diesem bekannten Rücklauftemperaturbegrenzer ersichtlich um eine Sonderkonstruktion hinsichtlich des Thermostatkopfs, welcher sich dann nur für diesen Zweck der Rücklauftemperaturbegrenzung einsetzen lässt.

Aus der DE 298 05 466 ist ein Rücklauftemperaturbegrenzer bekannt, bei dem ein Dehnstoffkörper verwendet wird, der innerhalb eines rohrförmigen Gehäuses untergebracht ist. Das rohrförmige Gehäuse selbst wird dabei von dem als Wärmeträger dienenden Fluid durchströmt. Bei diesem bekannten Rücklauftemperaturbegrenzer ist es zwar möglich, über ein Außengewinde im oberen Bereich zusätzlich einen Raumthermostatkopf aufzuschrauben. Auch hier handelt es sich dann aber um eine Sonderkonstruktion, wobei sich durch das Gehäuse des Rücklauftemperaturbegrenzers und den darauf angebrachten Thermostatkopf eine erhebliche axiale Bauhöhe ergibt.

Die Aufgabe der vorliegenden Erfindung besteht darin, einen Rücklauftemperaturbegrenzer der eingangs genannten Gattung zu schaffen, bei dem die Wärmeleitung zwischen dem Thermostatkopf und dem Thermostatventil zu Verbessern ist.

Die Lösung dieser Aufgabe liefert ein Rücklauftemperaturbegrenzer der eingangs genannten Gattung mit den kennzeichnenden Merkmalen des Hauptanspruchs. Der erfindungsgemäße Rücklauftemperaturbegrenzer umfasst als sich ausdehnende Element ein Dehnstoffelement mit einer mit Dehnstoff gefüllten wärmeleitenden Hülse . Ein solches Dehnstoffelement ist wesentlich kleiner dimensioniert als ein mit Flüssigkeit gefülltes Thermostatelement und kann daher platzsparend in dem Inneren des Thermostatkopfs bei dem erfindungsgemäßen Rücklauftemperaturbegrenzer untergebracht werden. Dadurch ist es möglich, dort weitere Bauteile anzuordnen. Außerdem ergibt sich der Vorteil, Thermostatkopf mit Drehgriff, Basisteil und weiteren Bauteilen von einem herkömmlich verwendeten serienmäßigen Thermostatventil zu verwenden. Es erübrigt sich also eine Sonderkonstruktion für den Rücklauftemperaturbegrenzer. Die Verwendung von bereits in Serie vorhandenen Bauteilen führt zu einer erheblichen Kostenersparnis in der Fertigung. Der erfindungsgemäße Rücklauftemperaturbegrenzer stimmt rein äußerlich mit einem üblichen Thermostatventil des gleichen Herstellers überein und hat auch die gleichen gegenüber dem Stand der Technik wesentlich reduzierten Abmessungen. Die Verwendung eines Dehnstoffelements im Inneren des Thermostatkopfs erlaubt es auch bei einem solchen Rücklauftemperaturbegrenzer außerdem eine Sollwerteinstellung zur Verfügung zu stellen.

Ein erfindungsgemäßer Rücklauftemperaturbegrenzer kann beispielsweise in Heizsystemen eingesetzt werden, die mit Heizkörpern arbeiten und mit Fußbodenheizung in Teilbereichen ergänzt sind. Der Rücklauftemperaturbegrenzer begrenzt die Wassertemperatur auf ein für das Fußbodenheizsystem verträgliches Temperaturniveau. Der Rücklauftemperaturbegrenzer kommt aber auch für andere Heizsysteme oder Warmwasserzirkulationssysteme in Betracht.

Das Innere des erfindungsgemäßen Rücklauftemperaturbegrenzers ist von dem Wärmeträger nicht durchspült. Die notwendige Wärmebrücke von dem Thermostatventil zum Dehnstoffelement ist vielmehr über gut wärmeleitende Bauteile verwirklicht, insbesondere über den Stößel und die gut wärmeleitende Hülse, die den Dehnstoff enthält, wohingegen das diese Teile umgebende Basisteil vorzugsweise aus einem wärmeisolierenden Material besteht, um Wärmeverluste nach außen zu vermeiden.

Die mit Dehnstoff gefüllte Hülse kann beispielsweise etwa becherförmig sein, wobei ihr dem Thermostatventil zugewandtes Ende einen Boden bildet, auf den der Stößel des Thermostatventils einwirkt. Die Hülse mit dem Dehnstoffelement ist in einer Aufnahme axial verschieblich geführt, wobei die Aufnahme eine Bewegung des Dehnstoffelements ausschließlich entlang einer Achse erlaubt und die zylindrische Seitenwand der Hülse vorzugsweise an einer Innenkontur der Aufnahme anliegt. Diese Aufnahme befindet sich weiterhin vorzugsweise innerhalb des Basisteils und wird von dem Basisteil mindestens abschnittsweise umschlossen.

Die Hülse mit dem Dehnstoff ist weiterhin vorzugsweise auf der dem Stößel gegenüberliegenden Seite von einem unter Vorspannung stehenden Federelement beaufschlagt. Dabei ist gemäß einer möglichen konstruktiven Lösung ein stiftförmiges Element vorgesehen, welches auf der dem Stößel gegenüberliegenden Seite mit einem ersten Ende in die dort in diesem Fall offene Hülse hineinragt, während das zweite Ende des stiftförmigen Elements von dem Federelement beaufschlagt wird. Die Federkraft wirkt dabei vorzugsweise über ein Bodenelement auf das stiftförmige Element, welches das eine Ende dieses stiftförmigen Elements aufnimmt. Dieses Bodenelement bietet dann eine flächige Anlage als Widerlager für das Federelement, z. B. eine Druckfeder.

Da die Hülse, die den Dehnstoff enthält, an der Seite des stiftförmigen Elements vorzugsweise offen ist, verwendet man beispielsweise einen die Hülse übergreifenden Deckel und das stiftförmige Element ragt dann mittig in diesen Deckel hinein und durchdringt diesen bis in den mit Dehnstoff gefüllten Bereich der Hülse. Vorzugsweise ist dabei das stiftförmige Element an seinem in die Hülse hineinragenden Ende von einer Hülle, insbesondere einem Gummibalg umschlossen.

Die vorgenannte Konstruktion mit dem stiftförmigen Element schafft eine Überlastsicherung für das Dehnstoffelement. Wenn nämlich die Temperatur einen bestimmten Grenzwert, der der Schließposition des Ventils entspricht, übersteigt, dann übt das stiftförmige Element an der dem Stößel und dem Thermostatventil abgewandten Seite eine Kraft auf das Federelement aus, die deren Vorspannungskraft entgegen wirkt und diese übersteigt. Diese Kraft wird vorzugsweise über das Bodenelement auf das Federelement übertragen und kann von dem sich dann kontrahierenden Federelement aufgenommen werden.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: einen erfindungsgemäßen Rücklauftemperaturbegrenzer, der an ein herkömmlich ausgebildetes Thermostatventil angeschlossen ist, im Schnitt, wobei in der linken bzw. in der rechten Zeichnungshälfte zwei Ventilstellungen dargestellt sind;
- Fig. 2: den gleichen Rücklauftemperaturbegrenzer bei geschlossenem Ventil in zwei Stellungen zur Erläuterung der Sicherung gegen Überlastung.

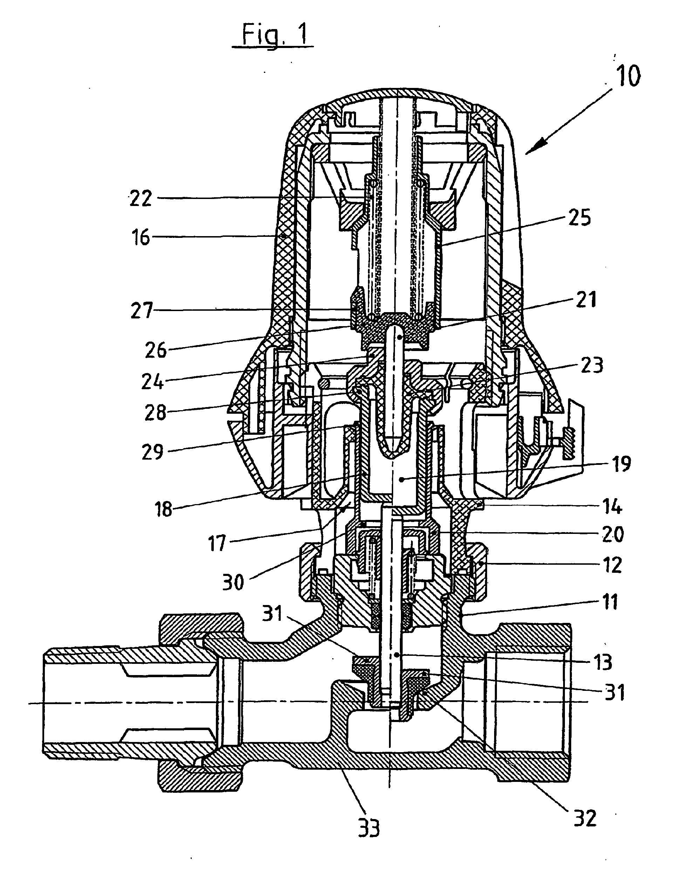

In der Fig. 1 ist ein erfindungsgemäßer Thermostatkopf 10 für einen Rücklauftemperaturbegrenzer gezeigt, und zwar zusammen mit einem herkömmlich ausgebildeten Thermostatventil 11. Der erfindungsgemäße Thermostatkopf 10 ist über eine Mutter 12 auf dem herkömmlichen Thermostatventil 11 lösbar befestigt. Über einen Stößel 13 des Thermostatventils 11 ist die Öffnungsstellung desselben steuerbar bzw. regelbar.

Der erfindungsgemäße Thermostatkopf 10 verfügt über ein Basisteil 14 sowie über einen gegenüber dem Basisteil 14 um eine Achse 15 verdrehbaren Drehgriff 16. In Figur 1 ist demnach das Basisteil 14 über die Mutter 12 am Thermostatventil 11 unverdrehbar befestigt, wobei der Drehgriff 16, gegenüber dem Basisteil 14 verdrehbar ist. In diesen Merkmalen unterscheidet sich der erfindungsgemäße Thermostatkopf 10 nicht von aus dem Stand der Technik bekannten Thermostatköpfen.

Erfindungsgemäß verfügt der Thermostatkopf 10 über ein Dehnstoffelement 17. Das Dehnstoffelement 17 erfasst die Temperatur des vom Thermostatventil 11 gesteuerten Wasserflusses und wirkt abhängig hiervon auf das Thermostatventil 11 ein.

Das Dehnstoffelement 17 umfasst eine becherförmige, wärmeleitende Hülse 18, die mit Dehnstoff 19 gefüllt ist. Die eine zylindrische Seitenwand aufweisende Hülse 18 des Dehnstoffelements 17 ist in einer Aufnahme 20 geführt. Die Aufnahme 20 erlaubt eine Bewegung des Dehnstoffelements 17 ausschließlich entlang der Achse 15. Die Aufnahme 20 bildet eine Führung für die Hülse 18. Die Außenkontur der Hülse 18 ist demnach an die Innenkontur der Aufnahme 20 angepasst.

Mit einem Ende, welches einen Boden der becherförmigen Hülse 18 bildet, liegt das Dehnstoffelement 17 auf dem Stößel 13 des Thermostatventils 11 auf. An dem hierzu gegenüberliegenden Ende des Dehnstoffelements 17 verfügt die Hülse 18 über einen Kragen 28. In dieses Ende ragt ein stiftförmiges Element 21 mit einem ersten Ende, wobei das hierzu gegenüberliegende Ende des stiftförmigen Elements 21 mit einem Federelement 22 zusammenwirkt. Gemäß Figur 1 ist das in die Hülse 18 hineinragende Ende des stiftförmigen Elements 21 von einer Hülle 23 umschlossen. Ein Deckel 24 umschließt die auf der Hülse 18 aufliegende Hülle 23. Mit dem Ende, mit dem das stiftförmige Element 21 mit dem Federelement 22 zusammenwirkt, durchdringt das stiftförmige Element 21 den Deckel 24.

Gemäß Figur 1 ist das Federelement 22 in einer Aufnahme 25 angeordnet, die unten von einem Bodenelement 26 verschlossen ist. Das Federelement 22 stützt sich mit einem Ende auf dem Bodenelement 26 und mit dem gegenüberliegenden Ende in der Aufnahme 25 ab. Das stiftförmige Element 21 liegt mit dem aus dem Dehnstoffelement 17 herausragenden Ende am Bodenelement an.

Die axiale Verschiebbarkeit des Bodenelements 26 und damit . des Federelements 22 in Richtung auf den Stößel 13 des Thermostatventils 11 wird durch einen Anschlag 27 begrenzt.

Die Aufnahme 20 verfügt ebenfalls über einen Kragen 29, wobei der Kragen 29 an Vorsprüngen des Basisteils 14 zur Anlage kommt und so unverlierbar im Basisteil 14 gesichert ist. Gegenüberliegend zum Kragen verfügt die Aufnahme über einen innenliegenden Vorsprung 30, der die Hülse 18 unverlierbar in der Aufnahme 20 sichert.

Über das Dehnstoffelement 17 wird die Temperatur des Stößels 13 und damit die Temperatur des vom Thermostatventil 11 geregelten bzw. gesteuerten Wasserstroms erfasst. Erhöht sich die Temperatur, so dehnt sich der Dehnstoff 19 aus, und das Dehnstoffelement 17 wird über die Führung im Basisteil 14 in Richtung auf den Stößel 13 bewegt, wodurch das Thermostatventil 11 in Schließrichtung bewegt wird. Übersteigt die vom Dehnstoffelement 17 erfasste Temperatur einen bestimmten Grenzwert, der der Schließposition des Ventils 11 entspricht, so wird vom stiftförmigen Element 21 auf das Federelement 22 eine Kraft ausgeübt, die der Vorspannungskraft des Federelements 22 entgegenwirkt und dieselbe übersteigt. In diesem Fall wird das Bodenelement 26 in das Federelement geschoben. Das Federelement 22 stellt demnach eine Überlastsicherung für das Dehnstoffelement 17 dar.

Über das Federelement 22 ist das Dehnstoffelement 17 bzw. die Hülse 18 mit Vorspannung im Basisteil 14 geführt. Im vom Thermostatventil 11 demontierten Zustand steht die Hülse 18 an dem Basisteil 14 vor. Beim Aufsetzen des Thermostatkopfs 10 auf das Thermostatventil 11 hat die Hülse 18 stirnseitig über den Boden mit dem Stößel 13 Kontakt und die Hülse 18 verschiebt sich beim Anziehen der Mutter 12 gegen die Federkraft des Federelements 22. Durch ein zusätzliches Federelement 34 ist stets Kontakt zwischen der Hülse 18 und dem Stößel 13 gewährleistet.

Der erfindungsgemäße Thermostatkopf 17 ist auf herkömmlich ausgebildeten Thermostatventilen einsetzbar. Es müssen demnach keine speziellen Thermostatventile mehr bereitgehalten werden. Hierdurch ergeben sich Vorteile, wie z. B. eine geringere Lagerhaltung, die Nachrüstbarkeit bereits eingebauter Thermostatventile, sowie eine höhere Wirtschaftlichkeit.

Wie man aus Figur 1 erkennt, ist in der links dargestellten Stellung der Ventilkegel 31 geöffnet und in der rechts dargestellten Stellung hat sich durch die Ausdehnung des Dehnstoffs 19 die Hülse 18 nach unten bewegt, was in einer axialen Bewegung des Stößels 13 resultierte, so dass der Ventilkegel 31 geschlossen wurde. Der Ventilkegel 31 bewegt sich wie man sieht in ansich bekannter Weise gegen einen Ventilsitz 32. Vorteilhaft ist, dass es sich bei dem Gehäusekörper 33 des Ventils um eine Standardarmatur handeln kann, die z. B. in den Rücklauf eines Heizkörpers einsetzbar ist. Auch der Thermostatkopf 10 und der Anschluss an den Gehäusekörper 33 über die Mutter 12 können Standardteile sein. Wie man sieht, nimmt das Dehnstoffelement 17 mit der Hülse 18 relativ wenig Platz in Anspruch und lässt sich problemlos in dem Thermostatkopf 10 unterbringen.

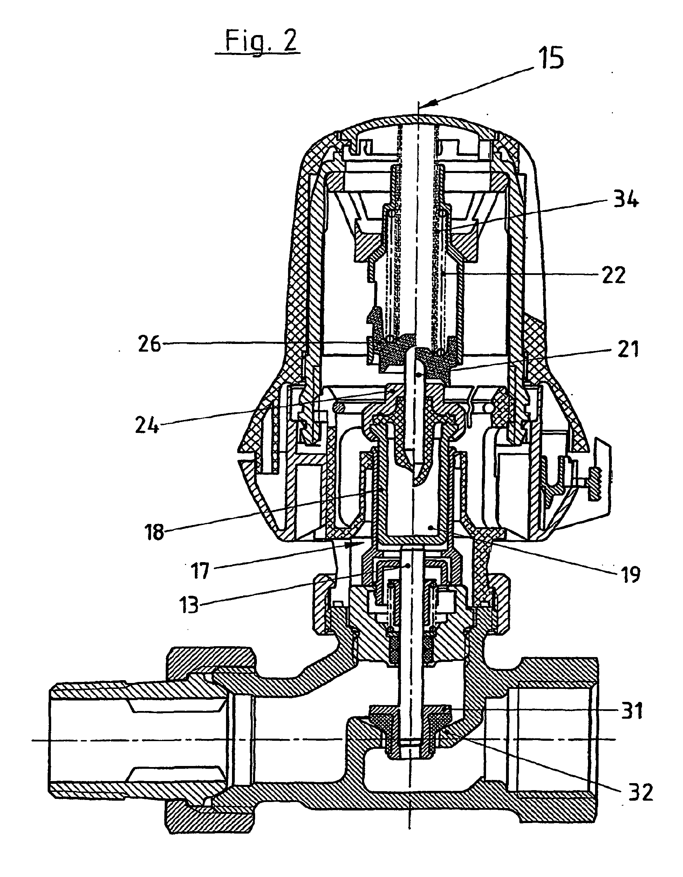

Figur 2 verdeutlicht nun die Überlastsicherung. Wie man sieht, ist in beiden gezeigten Stellungen sowohl in der linken als auch in der rechten Hälfte der Zeichnung der Ventilkegel 31 in der geschlossenen Stellung dargestellt, in der er auf dem Ventilsitz 32 aufsitzt. Wenn es nun bei der geschlossenen Stellung (siehe rechte Hälfte der Zeichnung) zu einer weiteren Ausdehnung des Dehnstoffs 19 in der Hülse 18 kommt, ist eine weitere axiale Bewegung des Stößels 13 nach unten in Richtung auf den Ventilsitz 32 nicht mehr möglich. Eine Kraft in diese Richtung würde zu einer Überlastung führen. Durch die Überlastsicherung bewegt sich nun aber das stiftförmige Element 21 in seiner Führung in dem Deckel 24 mit dem Bodenelement 26 gegen die Kraft des Federelements 22 nach oben, was in Figur 2 in der linken Zeichnungshälfte dargestellt ist. In dieser Gegenrichtung ist also weiterer Raum für eine weitere Ausdehnung des Dehnstoffs 19 und die Kräfte werden von dem Federelement 22 aufgenommen. Damit ist eine Überlastung bei einer Ausdehnung über einen Temperaturgrenzwert hinaus gegeben.

### Bezugszeichenliste

- 10: Thermostatkopf
- 11: Thermostatventil
- 12: Mutter
- 13: Stößel
- 14: Basisteil
- 15: Achse
- 16: Drehgriff
- 17: Dehnstoffelement
- 18: Hülse
- 19: Dehnstoff
- 20: Aufnahme
- 21: stiftförmiges Element
- 22: Federelement
- 23: Hülle
- 24: Deckel
- 25: Aufnahme
- 26: Bodenelement
- 27: Anschlag
- 28: Kragen
- 29: Kragen
- 30: Vorsprung
- 31: Ventilkegel
- 32: Ventilsitz
- 33: Gehäusekörper
- 34: Federelement

## Patentansprüche

1. Rücklauftemperaturbegrenzer umfassend einen Thermostatkopf (10) mit einem gegenüber einem Basisteil (14) um eine Achse (15) verdrehbaren Drehgriff (16) und ein Thermostatventil (11) mit einem axial verstellbaren Stößel (13), welcher mit einem Übergangsstück aus einem gut wärmeleitenden Material in Kontakt steht, wobei eine Temperaturerhöhung des Wärmeträgers im Rücklauf eine Axialbewegung eines auf den Stößel (13) einwirkenden sich ausdehnenden Elements (17) bewirkt, wobei jedoch das Innere des Rücklauftemperaturbegrenzers von dem Wärmeträger nicht durchspült wird, das sich ausdehnende Element ein Dehnstoffelement (17) mit einer mit Dehnstoff (19) gefüllten wärmeleitenden Hülse (18) umfasst, und die Hülse (18) des Dehnstoffelements (17) in einer Aufnahme (20) axial verschiebbar geführt ist,
**dadurch gekennzeichnet,**
**dass** die Aufnahme (20) einen Kragen (29) umfasst, der an Vorsprüngen des Basisteils (14) zur Anlage kommt, und so unverlierbar im Basisteil (14) gesichert ist.

2. Rücklauftemperaturbegrenzer nach Anspruch 1, **dadurch gekennzeichnet, dass** die mit Dehnstoff (19) gefüllte Hülse (18) etwa becherförmig ist und deren eines Ende einen Boden bildet, auf den der Stößel (13) des Thermostatventils (11) einwirkt.

3. Rücklauftemperaturbegrenzer nach einem der Ansprüche 1 oder 2, **dadurch gekennzeichnet, dass** die Aufnahme (20) eine Bewegung des Dehnstoffelements (17) ausschließlich entlang einer Achse (15) erlaubt, wobei die zylindrische Seitenwand der Hülse (18) an einer Innenkontur der Aufnahme (20) anliegt.

4. Rücklauftemperaturbegrenzer nach einem der Ansprüche 1 bis 3, **dadurch gekennzeichnet, dass** die Hülse (18) in dem Basisteil (14) geführt ist und auf der dem Stößel (13) gegenüberliegenden Seite von einem unter Vorspannung stehenden Federelement (22) beaufschlagt wird.

5. Rücklauftemperaturbegrenzer nach Anspruch 4, **dadurch gekennzeichnet, dass** ein stiftförmiges Element (21) auf der dem Stößel (13) gegenüberliegenden Seite mit einem ersten Ende in die Hülse (18) hineinragt, wobei das zweite Ende des stiftförmigen Elements (21) von dem Federelement (22) beaufschlagt wird.

6. Rücklauftemperaturbegrenzer nach einem der Ansprüche 4 bis 5, **dadurch gekennzeichnet, dass** das Federelement (22) mit seinem einen Ende gegen ein Bodenelement (26) wirkt, welches das eine Ende des stiftförmigen Elements (21) aufnimmt.

7. Rücklauftemperaturbegrenzer nach einem der Ansprüche 5 bis 6, **dadurch gekennzeichnet, dass** das stiftförmige Element (21) an seinem in die Hülse (18) hineinragenden Ende von einer Hülle (23) umschlossen ist.

8. Rücklauftemperaturbegrenzer nach einem der Ansprüche 5 bis 7, **dadurch gekennzeichnet, dass** das stiftförmige Element (21) einen die Hülse (18) übergreifenden Deckel (24) durchdringt.

9. Rücklauftemperaturbegrenzer nach einem der Ansprüche 2 und 4 bis 8, **dadurch gekennzeichnet, dass** die Hülse (18) an ihrem einen Ende einen Kragen (28) aufweist, den der Deckel (24) übergreift.

10. Rücklauftemperaturbegrenzer nach einem der Ansprüche 8 bis 9, **dadurch gekennzeichnet, dass** der Deckel (24) die teilweise auf der Hülse (18) aufliegende Hülle (23) umschließt.

11. Rücklauftemperaturbegrenzer nach einem der Ansprüche 3 bis 10, **dadurch gekennzeichnet, dass** eine durch Verdrehen des Drehgriffs (16) um die Achse (15) erreichbare Sollwerteinstellung vorgesehen ist.

## Claims

1. Return temperature limiter, comprising a thermostat head (10) with a rotary grip (16) rotatable about an axis (15) with respect to a base part (14), and a thermostat valve (11) with an axially adjustable tappet (13) which is in contact with a transition piece consisting of a highly heat-conductive material, a temperature rise in the heat transfer medium in the return causing axial movement of an expanding element (17) acting on the tappet (13), although the heat transfer medium is not flushed through the interior of the return temperature limiter, the expanding element comprising an expansion element (17) having a heat-conducting sleeve (18) filled with expandable material (19), and the sleeve (18) of the expansion element (17) being guided axially displaceably in a receptacle (20), **characterized in that** the receptacle (20) comprises a collar (29) which comes to bear against projections of the base part (14) and is thus secured captively in the base part (14).

2. Return temperature limiter according to Claim 1, **characterized in that** the sleeve (18) filled with expandable material (19) is approximately cup-shaped, and one of its ends forms a bottom, on which the tappet (13) of the thermostat valve (11) acts.

3. Return temperature limiter according to either of Claims 1 or 2, **characterized in that** the receptacle (20) allows a movement of the expansion element (17) solely along an axis (15), the cylindrical side wall of the sleeve (18) bearing against an inner contour of the receptacle (20).

4. Return temperature limiter according to one of Claims 1 to 3, **characterized in that** the sleeve (18) is guided in the base part (14) and on the side located opposite the tappet (13) is acted upon by a spring element (22) standing under prestress.

5. Return temperature limiter according to Claim 4, **characterized in that** a pin-shaped element (21) projects with a first end into the sleeve (18) on the side located opposite the tappet (13), the second end of the pin-shaped element (21) being acted upon by the spring element (22).

6. Return temperature limiter according to one of Claims 4 and 5, **characterized in that** the spring element (22) acts with one of its ends against a bottom element (26) which receives one end of the pin-shaped element (21).

7. Return temperature limiter according to one of Claims 5 and 6, **characterized in that** the pin-shaped element (21) is surrounded at its end projecting into the sleeve (18) by a casing (23).

8. Return temperature limiter according to one of Claims 5 to 7, **characterized in that** the pin-shaped element (21) penetrates through a cover (24) engaging over the sleeve (18).

9. Return temperature limiter according to one of Claims 2 and 4 to 8, **characterized in that** the sleeve (18) has at one end a collar (28) over which the cover (24) engages.

10. Return temperature limiter according to one of Claims 8 and 9, **characterized in that** the cover (24) surrounds the casing (23) partially lying on the sleeve (18).

11. Return temperature limiter according to one of Claims 3 to 10, **characterized in that** a desired-value setting achievable by means of the rotation of the rotary grip (16) about the axis (15) is provided.

## Revendications

1. Limiteur de température de retour, comprenant une tête thermostatique (10) avec une prise rotative (16) pouvant être tournée autour d'un axe (15) par rapport à une partie de base (14) et une soupape thermostatique (11) avec un plongeur (13) déplaçable axialement qui est en contact avec une pièce de transition en un matériau bon conducteur de la chaleur, une augmentation de la température du fluide caloporteur dans le circuit de retour provoquant un déplacement axial d'un élément (17) se dilatant agissant sur le plongeur (13), l'intérieur du limiteur de température de retour n'étant toutefois pas parcouru par le fluide caloporteur, l'élément se dilatant comprenant un élément en matière expansible (17) avec une gaine (18) conductrice de la chaleur remplie de matière expansible (19), et la gaine (18) de l'élément en matière expansible (17) étant guidée dans un logement (20) de manière à pouvoir coulisser axialement,
**caractérisé en ce que** le logement (20) comprend un rebord (29) qui vient en appui contre des saillies de la partie de base (14) et qui est donc fixé de manière imperdable dans la partie de base (14).

2. Limiteur de température de retour selon la revendication 1, **caractérisé en ce que** la gaine (18) remplie de matière expansible (19) a approximativement la forme d'une timbale et l'une de ses extrémités forme un fond sur lequel agit le plongeur (13) de la soupape thermostatique (11).

3. Limiteur de température de retour selon l'une quelconque des revendications 1 ou 2, **caractérisé en ce que** le logement (20) permet un déplacement de l'élément en matière expansible (17) exclusivement le long d'un axe (15), la paroi latérale cylindrique de la gaine (18) s'appliquant contre un contour intérieur du logement (20).

4. Limiteur de température de retour selon l'une quelconque des revendications 1 à 3, **caractérisé en ce que** la gaine (18) est guidée dans la partie de base (14) et est sollicitée sur le côté opposé au plongeur (13) par un élément de ressort (22) précontraint.

5. Limiteur de température de retour selon la revendication 4, **caractérisé en ce qu'**un élément (21) en forme de tige pénètre dans la gaine (18) du côté opposé au plongeur (13) avec une première extrémité, la deuxième extrémité de l'élément en forme de tige (21) étant sollicitée par l'élément de ressort (22).

6. Limiteur de température de retour selon l'une quelconque des revendications 4 à 5, **caractérisé en ce que** l'élément de ressort (22) agit avec l'une de ses extrémités contre un élément de fond (26) qui reçoit une extrémité de l'élément en forme de tige (21).

7. Limiteur de température de retour selon l'une quelconque des revendications 5 à 6, **caractérisé en ce que** l'élément en forme de tige (21) est enveloppé par une enveloppe (23) au niveau de son extrémité pénétrant dans la gaine (18).

8. Limiteur de température de retour selon l'une quelconque des revendications 5 à 7, **caractérisé en ce que** l'élément en forme de tige (21) traverse un couvercle (24) venant en prise par le dessus avec la gaine (18).

9. Limiteur de température de retour selon l'une quelconque des revendications 2 et 4 à 8, **caractérisé en ce que** la gaine (18) présente à l'une de ses extrémités un collet (28) qui vient en prise par le dessus avec le couvercle (24).

10. Limiteur de température de retour selon l'une quelconque des revendications 8 à 9, **caractérisé en ce que** le couvercle (24) entoure l'enveloppe (23) reposant partiellement sur la gaine (18).

11. Limiteur de température de retour selon l'une quelconque des revendications 3 à 10, **caractérisé en ce que** l'on prévoit un ajustement de valeur de consigne pouvant être obtenu par rotation de la prise rotative (16) autour de l'axe (15).
